Europäisches Patentamt

European Patent Office

Office européen des brevets

(19)

(11) **EP 1 531 441 A2**

(12) **EUROPEAN PATENT APPLICATION**

(43) Date of publication:
**18.05.2005 Bulletin 2005/20**

(51) Int Cl.⁷: $G08G\ 1/09$

(21) Application number: **04018839.3**

(22) Date of filing: **09.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **12.11.2003 KR 2003079869**

(71) Applicant: **Samsung Electronics Co., Ltd.**
**Suwon-si, Gyeonggi-do (KR)**

(72) Inventors:
• **Min, Hyun-Suk Samsung Electronics Co., Ltd.**
**Suwon-si Gyeonggi-do (KR)**

• **Chun, Kyong-Joon**
**Samsung Electronics Co., Ltd.**
**Suwon-si Gyeonggi-do (KR)**
• **Kim, Jin-Won Samsung Electronics Co., Ltd.**
**Suwon-si Gyeonggi-do (KR)**
• **Kim, Wuk Samsung Electronics Co., Ltd.**
**Suwon-si Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Off-board navigation system and method for calibrating error using the same**

(57)     An off-board navigation system and method for calibrating an error using the same. A server provided in the off-board navigation system calculates a predetermined path using a pre-stored map in response to a request, generates calibration information based upon the calculated path, and transmits the calculated path and the calibration information. A terminal provided in the off-board navigation system requests that the server calculate the predetermined path, receives the calculated path and the calibration information, compares the calibration information and position information measured by sensors embedded in the terminal, and compensates for the sensors. The off-board navigation system can calibrate a position error between map information and actual traveling information, and hence can improve the accuracy of navigation service.

FIG.2

**EP 1 531 441 A2**

**Description**

The present invention relates to a navigation system, and more particularly to a navigation system and method that can calibrate a sensor error in an off-board navigation system and increase the accuracy of a determined position of a car.

A navigation system (referred to as a car navigation system) can inform a user of the current position of a car, provide an optimum routing path to a desired destination, guide a driver to the destination according to the routing path, and provide a variety of additional information to enhance the driving experience.

A primary function of a car navigation system is to provide navigation technology for accurately determining a current position of a car. Conventionally, in order for the car navigation system to measure the current position, a global positioning system (GPS) and a dead reckoning (DR) system are used.

The GPS is a global position determination system using 24 satellites orbiting at an altitude of approximately 20,183 Km above the Earth. The GPS receives a radio wave transmitted from a satellite, measures the elapsed time necessary for transmitting the radio wave from the satellite to an observation point, and determines a position of the observation point. A position measurement unit using the GPS can recognize a position (x, y, z) of a moving object equipped with a GPS receiver and time information t.

The DR system is based upon navigation technology capable of determining a position and a traveling direction using an inertial sensor without the use of external systems. The inertial sensor (referred to as a DR sensor) for use in the above-described DR system is essentially comprised of a sensor (e.g., a speedometer, wheel sensor, accelerometer or etc.) for measuring a traveled distance, and a sensor (e.g., an earth magnetic sensor, gyroscope or etc.) for measuring a rotation angle.

The GPS is affected by an ionosphere delay error, satellite clock bias, multi-path error, etc. The DR sensor is affected by an initial alignment error, a conversion factor error and an error caused by a sensor characteristic. The above errors cause in determining an accurate position. In particular, when going past a high building, a roadside tree, a tunnel, etc, a car cannot accurately receive a GPS satellite signal and hence an error is further incurred. In this case, when position information measured using the GPS and DR system is expressed on a map, the actual car position is different from the position information expressed on the map.

The car navigation system calibrates for errors by performing a map matching operation using the position of the car and an attitude angle calculated by a GPS/DR integration filter. That is, the map matching operation is carried out using road network materials of the map (e.g., a digital map) so that an accurate position can be determined.

An error calibration method using the map matching operation can be enabled in an on-board navigation system. However, when the digital map is not provided, the error calibration method can be disabled.

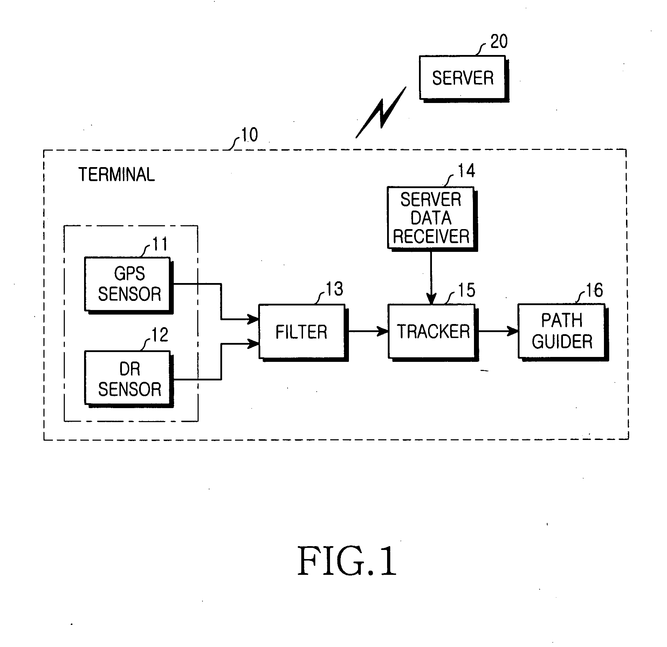

FIG. 1 is a schematic block diagram illustrating a conventional off-board navigation system. Referring to FIG. 1, a server 20 of the off-board navigation system stores a digital map. The server 20 carries out complex path calculations and generates guide information according to a request from a terminal 10 or operation condition which the server 20 sets itself, such that a result of the calculation and the generated guide information are transmitted to the terminal 10.

The terminal 10 of the off-board navigation system includes a sensor unit containing a global positioning system (GPS) sensor 11 and a dead reckoning (DR) sensor 12, a filter 13, a server data receiver 14, a tracker 15 and a path guider 16.

The GPS sensor 11 is used for receiving a GPS signal. That is, the GPS sensor 11 receives the GPS signal and detects car position information (x, y, z) and current time information t from the received GPS signal. The DR sensor 12 determines a relative self position and a traveling direction, and detects the car's velocity v and angle θ. The filter 13 is implemented by a GPS/DR integration filter, receives the car position information (x; y, z) and time information t from the GPS sensor 11, and receives the car's velocity v and angle θ , such that the car's current position can be calculated. The server data receiver 14 receives the path calculation result and guide information. The tracker 15 receives data from the server 20 through the server data receiver 14 and receives a current position measurement result from the filter 13. The tracker 15 compares path information from the server 20 with a current position, and tracks a current traveling state to transfer relevant information to the path guider 16. The path guider 16 guides a user along a path using the traveling state information generated from the tracker 15.

As described above, the conventional navigation system without a digital map determines a current position using information from the server 20. The conventional navigation system performs only a guide operation, but disables a sensor calibration operation of the terminal 10.

Furthermore, having no sensor provides calibration data associated with current position data in the off-board navigation system without a digital map. Consequently, the off-board navigation system cannot accurately perform a calibration operation for the current position data containing an error caused by an error of the GPS sensor and DR sensor. The accuracy of navigation service provided by the conventional navigation system is degraded according to a sensor error. For example, when guide information associated with an optimum path is conventionally provided, erroneous information associated with a guide time-point and derailment can be generated by the sensor error.

Therefore, the present invention is provided in view of the above problems.

It is the object of the present invention to provide an off-board navigation system and method for calibrating for errors that can improve the accuracy of navigation service using the off-board navigation system.

This object is solved by the subject matter of the independent claims.

Preferred embodiments are defined in the dependent claims.

It is an aspect of the present invention to provide an off-board navigation system and method for calibrating for sensor errors in the off-board navigation system to perform accurate position determination.

It is another aspect of the present invention to provide an off-board navigation system and method for calibrating for sensor errors of a moving terminal provided in the off-board navigation system using optimum calibration data from a server provided in the off-board navigation system.

In accordance with one aspect of the present invention, the above object can be accomplished by providing navigation system, comprising: a server for calculating a predetermined path using a pre-stored map in response to a request from a terminal, generating calibration information based upon the calculated path, and transmitting to the terminal the calculated path and the calibration information; and the terminal for requesting the calculations, receiving the calculated path and the calibration information from the server, comparing the calibration information and position information measured by sensors embedded in the terminal, and calibrating the sensors.

In accordance with another aspect of the present invention, the above can be accomplished by providing a method for performing an error calibration operation in navigation system including a server and a terminal, comprising the steps of: (a) receiving and storing calibration section information designated by the server, and receiving current position data of the terminal from sensors embedded in the terminal; (b) comparing a current position of the terminal and the section information, and determining if the current position of the terminal is contained in a calibration section; (c) storing the current position data of the terminal if the current position of the terminal is contained in the calibration section, and receiving next position data from the sensors; (d) comparing the stored position data with data of the calibration section if the current position of the terminal is not contained in the calibration section, and generating sensor calibration data; and (e) calibrating the sensors using the sensor calibration data.

The above object and other aspects, features and other advantages of the present invention will be more clearly understood from the following detailed description taken in conjunction with the accompanying drawings, in which:

FIG. 1 is a block diagram illustrating a conventional off-board navigation system;

FIG. 2 is a flow chart illustrating a processing method for use in an off-board navigation system in accordance with one embodiment of the present invention;

FIG. 3 is a block diagram illustrating a server provided in the off-board navigation system in accordance with one embodiment of the present invention;

FIG. 4 is a block diagram illustrating a terminal provided in the off-board navigation system in accordance with one embodiment of the present invention;

FIGS. 5A and 5B are diagrams illustrating a position calibration process in accordance with one embodiment of the present invention;

FIG. 6 is a flow chart illustrating a method for performing a position calibration operation in the off-board navigation system in accordance with one embodiment of the present invention; and

FIG. 7 is a flow chart illustrating a sensor calibration operation in the off-board navigation system in accordance with one embodiment of the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may obscure the subject matter of the present invention.

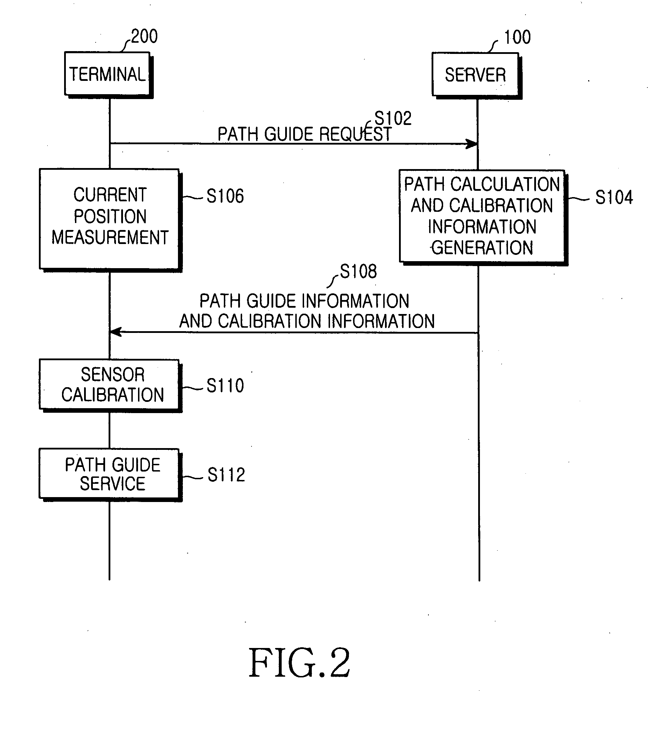

FIG. 2 is a flow chart illustrating a processing method for use in an off-board navigation system in accordance with one embodiment of the present invention. The processing method for use in the off-board navigation system in accordance with the one embodiment of the present invention will now be described with reference to FIG. 2.

First, a terminal 200 transmits a path guide request message containing current position information and destination information to a server 100 (S102). The server 100 calculates a path between a current position and a destination in response to the path guide request message, and generates calibration information from the calculated path (S104). The generated calibration information includes section information (e.g., an intersection, etc.) so that a position calibration operation can be easily performed. If an intersection is positioned on the calculated path, the server generates intersection information as the calibration information. The calibration information and path guide information based upon a result of the path calculation are transmitted to the terminal 200 (S108).

The terminal 200 measures a current position of the terminal 200 after making the path guide request (S106). The terminal 200 calibrates position measurement sensors (e.g., the GPS and DR sensors) provided in the terminal 200 using the calibration information received at the above step S108 (S110), and then performs a path guide service (S112).

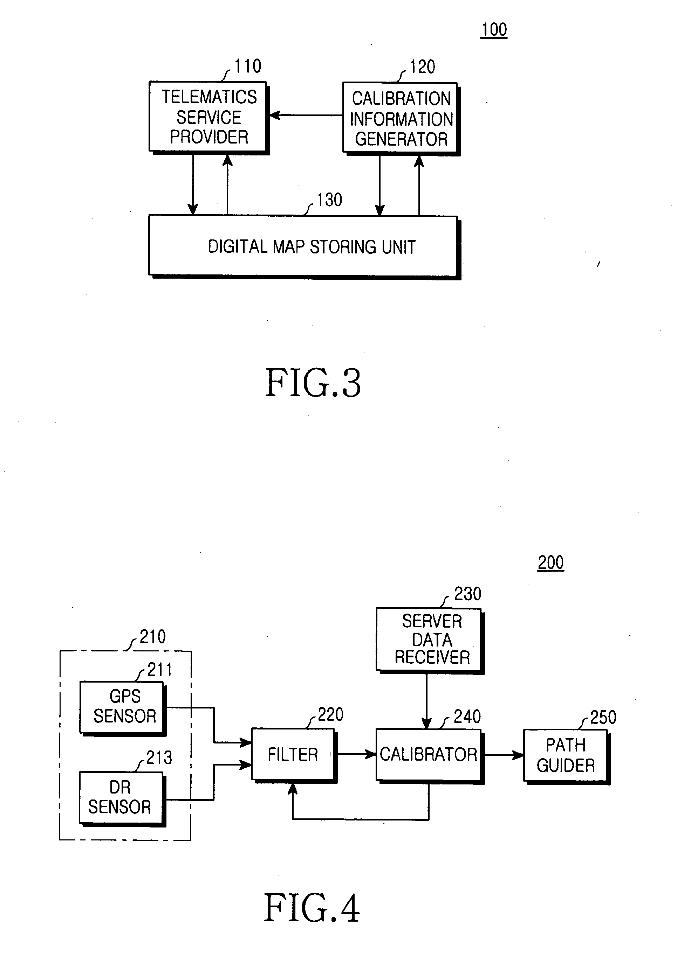

FIGS. 3 and 4 are block diagrams illustrating the server 100 and the terminal 200. Referring to FIGS. 3 and 4, the present invention will be described in detail.

First, FIG. 3 is a block diagram illustrating the server 100 provided in the off-board navigation system in accordance with one embodiment of the present invention. Referring to FIG. 3, the server 100 of the off-board navigation system in accordance with the one embodiment of the present invention provides information (e.g., optimum path, point of interest (POI) and search information, etc.) requested by the terminal 200 using a pre-stored digital map, and includes a telematics service provider 110, a calibration information generator 120 and a digital map storing unit 130.

The digital map storing unit 130 stores at least one previously generated digital map.

The telematics service provider 110 provides a telematics service using the digital map stored in the digital map storing unit 130. The term "telematics" is a compound word of telecommunication and informatics. The telematics service is based upon technology capable of providing various application services (e.g., services for providing information of car accident or robbery detection, driving path guide, traffic, living, games, etc.) to a driver in real time by applying, to a car, telecommunication technology and positioning technology. Thus, the telematics service includes service for providing path guide information to the terminal mounted in the car using a communication network in the navigation system of the present invention.

That is, the telematics service provider 110 generates service information (e.g., optimum path search, POI search and traffic information) relating to a traveling car, and provides the generated service information to the terminal through the communication network. If the terminal has referred to the digital map and has made an optimum path search request, the telematics service provider 110 searches an optimum path using link and node information serving as network data of the digital map. However, if the terminal has made an optimum path search request containing an additional request for calibration information, the telematics service provider 110 searches an optimum path using a corresponding weight value mapped to the calibration information.

The calibration information generator 120 generates information necessary for a sensor calibration operation of the terminal provided in the navigation system. When position information (e.g., intersection information), which allows the sensor calibration operation to be performed while the optimum path search is used, is detected, the calibration information is generated using the detected position information. Network information of the digital map mapped to corresponding position information is generated as the calibration information. The generated calibration information is transmitted to the terminal by a radio signal. It is preferable that the calibration information generator 120 sets a predetermined section corresponding to a sensor calibration position as a calibration section, and transmits information of the set predetermined section.

FIG. 4 is a block diagram illustrating the terminal 200 provided in the off-board navigation system in accordance with one embodiment of the present invention. Referring to FIG. 4, the terminal 200 of the off-board navigation system in accordance with the one embodiment of the present invention detects a current position and compares the detected current position with position information received from the server so that proper guide information can be provided to the user. The terminal 200 includes a sensor unit 210, a filter 220, a server data receiver 230, a calibrator 240 and a path guider 250.

The sensor unit 210 is a device for determining the current position of a car, and includes a global positioning system (GPS) sensor 211 and a dead reckoning (DR) sensor 213. The GPS sensor 211 receives a GPS signal and then detects car position information (x, y, z) and time information t using the received GPS signal. The DR sensor 213 determines relative self position and a traveling direction using previous position information, and detect the car's velocity v and angle $\theta$.

The filter 220 produces final position data by filtering measured position data of a car input from the sensor unit 210. That is, the filter 220 receives the car position information (x, y, z) and the time information t from the GPS sensor 211, and receives the car's velocity v and angle $\theta$ from the DR sensor 213 to produce the final position data. Because the position data from the GPS sensor 211 and the position data from the DR sensor 213 that are input into the filter 220 include errors, a current position detected using the position data always contains an error.

Accordingly, in order for the system to be calibrated to compensate for the errors, the server data receiver 230 receives calibration information along with optimum path information from the server 100. The server data receiver 230 stores the calibration information. It is preferable that the calibration information is section information containing position data of an intersection on the optimum path.

The calibrator 240 generates sensor calibration data using current position data produced by the filter 220 and the calculation information stored in the server data receiver 230. The calibrator 240 generates a calibration value to compensate for a sensor error where the current position data is contained in calibration section information transferred from the server. The calibrator 240 transfers the generated calibration value to the filter 220. The filter 220 calibrates output data of the sensor unit 210 containing an error using the calibration value.

Typically, the sensor calibration is carried out in the filter 220 using the GPS and DR system, or by performing a calibration operation after performing a map-matching operation associated with a current position using a digital map. The sensor calibration using the GPS can be enabled by performing a map-matching algorithm using the digital map. However, the off-board navigation system in which the digital map is not embedded cannot perform the sensor calibration. Thus, when the server 100 transmits path guide data in accordance with the present invention, calibration information (e.g., calibration section information) for the sensor calibration is transmitted. The terminal 200 calibrates the sensors using the calibration information.

The calibrated data is provided to the user through the path guider 250. The path guider 250 accurately provides a guide service to the user using the calibrated position data.

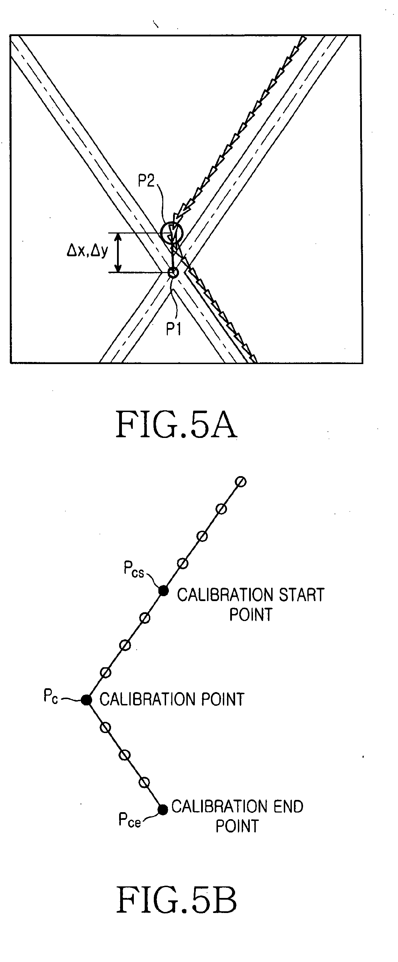

FIGS. 5A and 5B are diagrams illustrating a position calibration process in accordance with one embodiment of the present invention.

The typical digital map contains various information (e.g., node, link and display information, etc.), while information transmitted from the server to the terminal in the navigation system contains only digital map information corresponding to the car's optimum path. FIG. 5A depicts car traveling log information contained in the digital map. The curve formed by the consecutive small triangles corresponds to car traveling log information on the digital map, and the X shape surrounding the curve represents roads. In the example of FIG. 5A, the car travels from a top right direction to a bottom right direction through an intersection.

The path information and calibration information are shown in FIG. 5B. As shown in FIG. 5B, a plurality of O-shaped marks denote nodes and shape points, and a line connecting the nodes represents a link. The calibration information transferred from the server to the terminal in the navigation system configures node, shape point and link information as shown in FIG. 5B. The calibration information contains a calibration start point $P_{cs}$, a calibration point $P_c$ and a calibration end point $P_{ce}$. In this example, the calibration point $P_c$ indicates a center of the intersection in the digital map. The calibration start point $P_{cs}$ and the calibration end point $P_{ce}$ are contained in a calibration section being within a predetermined range from the calibration point $P_c$. The calibration start point $P_{cs}$ and the calibration end point $P_{ce}$ are determined by the traveling direction of the car. The calibration section containing an optimum point (i.e., an optimum calibration point) for calibrating the sensors is calculated and inputted by the server. The optimum calibration point corresponds to a section for calibrating errors of $\Delta x$ and $\Delta y$ of the sensors and typically uses an intersection at which the car turned. The sensor error is calibrated at the intersection region when a current position and an intersection turning point are confirmed.

FIG. 5A shows the calibration information containing a position information reference point P1, a position calibration target point P2 through which the car has actually traveled, and a position calibration value ($\Delta x$, $\Delta y$) based upon the position information reference point P1 and the position calibration target point P2. The position calibration value ($\Delta x$, $\Delta y$) indicates the difference between the position information reference point P1 and the position calibration target point P2.

The filter 220 shown in FIG. 4 calibrates a sensor value transferred from the sensor unit 210 shown in FIG. 4 according to the position calibration value ($\Delta x$, $\Delta y$), and generates final position data using the calibrated sensor value.

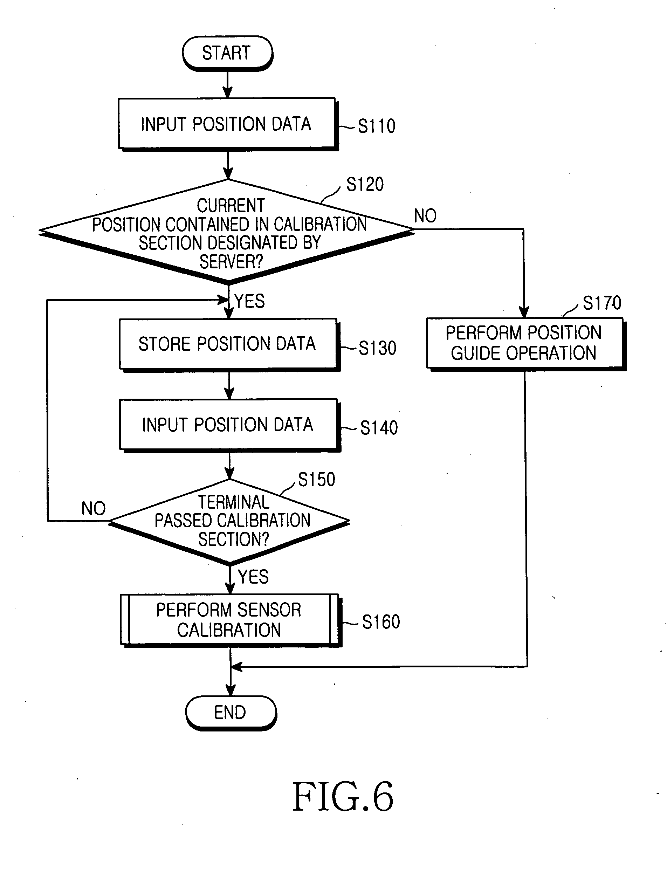

FIG. 6 is a flow chart illustrating a method for performing a position calibration operation in the off-board navigation system in accordance with one embodiment of the present invention. Referring to FIG. 6, the terminal of the off-board navigation system receives position data from the sensor unit embedded therein (S110). A determination is made as to whether a position corresponding to the position data is contained in a calibration section designated by the server (S120). In order for the determination to be performed, the terminal must receive calibration section information from the server.

If a position corresponding to the position data is not contained in a calibration section designated by the server, the terminal performs a position guide operation for the user using the position information (S170).

If a position corresponding to the position data is contained in the calibration section designated by the server, the terminal stores the position data (S130) and receives new position data from the sensor unit embedded therein (S140). The position data received at step S140 corresponds to a position of the terminal according to the car traveling operation. An operation for storing the position data of the terminal at step S130 is performed, after accumulating an actual traveling path value of the terminal in the calibration section designated by the server, to reduce an error of the sensor unit embedded in the terminal using a comparison value between a traveling path value of the digital map corresponding to the section and the accumulated traveling path value.

The terminal receiving the new position data at step S140 compares the new position data with the calibration section designated by the server, and determines if the terminal has passed the calibration section (S150). If the terminal has not passed the calibration section , the above steps S130 and S140 are repeated. The terminal continuously stores position data received from the sensor unit until the terminal passes the calibration section.

If the terminal has passed the calibration section, position data corresponding to an actual traveling path value of the terminal stored at the above steps S130 and S140 is compared with position data of the digital map corresponding to the calibration section, and then the sensor unit embedded in the terminal is calibrated.

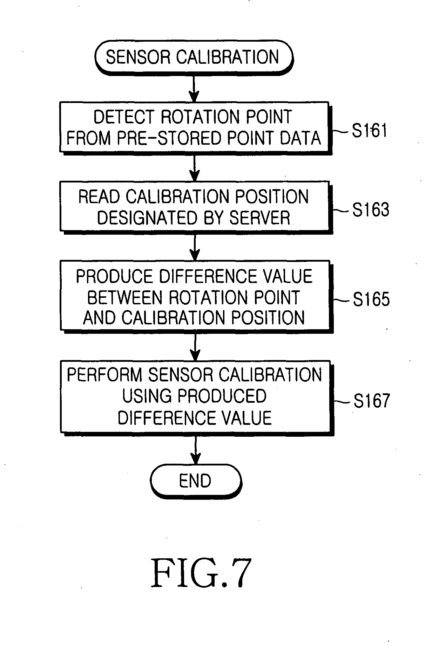

FIG. 7 is a flow chart illustrating the sensor calibration operation (S160) in the off-board navigation system in accordance with one embodiment of the present invention. Referring to FIG. 7, the sensor calibration operation will be described in detail.

The terminal detects its actual rotation point from the stored position data while traveling through the calibration section (S161). The terminal reads a calibration position designated by the server (S163), and calculates the difference ($\Delta$x, $\Delta$y) between the detected rotation point and the calibration position (S165).

The following Equation 1 is used to calculate the difference.

Equation 1

$$\Delta x = ABS(x\_calibration\_position - x\_sensor\_rotation\_point)$$

$$\Delta y = ABS(y\_calibration\_position - y\_sensor\_rotation\_point)$$

In Equation 1, "calibration_position" denotes a calibration position designated by the server, and "sensor rotation_point" denotes a car rotation point, i.e., an actual traveling position.

The difference value ($\Delta$x, $\Delta$y) has been calculated at step S165. The sensors (e.g., the GPS sensor and DR sensor) embedded in the terminal are calibrated using the produced difference value ($\Delta$x, $\Delta$y) (S167).

As described above, the server of the off-board navigation system allows the terminal to calibrate a sensor error using optimum calibration data while performing a traveling operation, such that the off-board navigation system can compensate for a position error between map information and actual traveling information. Therefore, the off-board navigation system can improve the accuracy of navigation service.

Although the preferred embodiments of the present invention have been disclosed for illustrative purposes, those skilled in the art will appreciate that various modifications, additions and substitutions are possible, without departing from the scope of the invention. Accordingly, the present invention is not limited to the above-described embodiments, but the present invention is defined by the claims.

**Claims**

**1.** A navigation system, comprising:

a server for calculating a predetermined path using a pre-stored map in response to a request from a terminal, generating calibration information based upon the calculated path, and transmitting to the terminal the calculated path and the calibration information; and
the terminal for requesting the calculations, receiving the calculated path and the calibration information from the server, comparing the calibration information and position information measured by sensors embedded in the terminal, and calibrating the sensors.

**2.** The navigation system as set forth in claim 1, wherein the calibration information is section information necessary for performing a position calibration operation in relation to the path calculated by the server.

**3.** The navigation system as set forth in claim 1 or 2, being adapted for compensating for information that is section information necessary for simultaneously calibrating an error of an "x" coordinate value and an error of a "y" coordinate value associated with position data.

**4.** The navigation system as set forth in claim 3, wherein the calibration information is the section information containing position data of an intersection on the calculated path.

**5.** The navigation system as set forth in claim 4, wherein the calibration information contains position data of a calibration start point, a calibration point and a calibration end point.

**6.** The navigation system as set forth in any one of claims 1 to 5, wherein the server comprises:

a digital map storing unit for storing a pre-generated digital map;
a telematics service provider for generating telematics service information containing path guide service information using the digital map stored in the digital map storing unit, and providing the generated telematics service information to the terminal; and

a calibration information generator for generating the calibration information necessary for enabling the terminal to perform the sensor calibration operation using the path guide service information generated from the telematics service provider, and providing the calibration information to the terminal.

7. The navigation system as set forth in any one of claims 1 to 6, wherein the terminal comprises:

a sensor unit for measuring a current position of a moving object;

a filter for filtering measured position data of the moving object outputted from the sensor unit and producing final position data;

a server data receiver for receiving the calibration information along with optimum path information from the server and storing the received calibration information; and

a calibrator for comparing the final position data of the moving object produced by the filter with the calibration information stored in the server data receiver, generating sensor calibration data, and transmitting the generated sensor calibration data to the filter.

8. The navigation system as set forth in claim 7, wherein the sensor unit comprises:

a GPS sensor for detecting position information and time information using a GPS signal; and

a dead reckoning sensor for detecting a relative self position and a traveling direction.

9. The navigation system as set forth in claim 8, wherein the filter calibrates output values of the sensor unit using the sensor calibration data input from the calibrator.

10. A method for performing an error calibration operation in a navigation system including a server and a terminal, comprising the steps of:

(a) receiving and storing calibration section information designated by the server, and receiving current position data of the terminal from sensors embedded in the terminal;

(b) comparing a current position of the terminal and the section information, and determining of the current position of the terminal is contained in a calibration section;

(c) storing the current position data of the terminal if the current position of the terminal is contained in the calibration section, and receiving next position data from the sensors;

(d) comparing the stored position data with data of the calibration section if the current position of the terminal is not contained in the calibration section, and generating sensor calibration data; and

(e) calibrating the sensors using the sensor calibration data.

11. The method as set forth in claim 10, wherein step (d) comprises the steps of:

(d-1) detecting an actual rotation point of the terminal from the stored position data;

(d-2) reading the calibration section information received from the server and comparing the calibration section information and the actual rotation point; and

(d-3) generating the sensor calibration data according to a result of the comparison.

FIG.1

FIG.2

_100_

```
   ┌110                              ┌120
┌──────────────┐              ┌──────────────┐
│  TELEMATICS  │◄─────────────│  CALIBRATION │
│   SERVICE    │              │  INFORMATION │
│   PROVIDER   │              │   GENERATOR  │
└──────────────┘              └──────────────┘
```

┌130

```
┌────────────────────────────────────────────┐
│          DIGITAL MAP STORING UNIT           │
└────────────────────────────────────────────┘
```

# FIG.3

_200_

```
                        ┌230
                  ┌──────────────┐
                  │    SERVER     │
                  │     DATA      │
                  │   RECEIVER    │
                  └──────────────┘

  ┌210
  ┌──────────┐
  │ ┌211     │
  │┌────────┐│
  ││  GPS   ││
  ││ SENSOR ││          ┌220         ┌240        ┌250
  │└────────┘│     ┌────────┐   ┌──────────┐  ┌─────────┐
  │ ┌213     │────►│ FILTER │──►│CALIBRATOR│─►│  PATH   │
  │┌────────┐│     └────────┘   └──────────┘  │ GUIDER  │
  ││   DR   ││                                 └─────────┘
  ││ SENSOR ││
  │└────────┘│
  └──────────┘
```

# FIG.4

10

FIG.5A

FIG.5B

START

INPUT POSITION DATA —S110

S120

CURRENT
POSITION CONTAINED IN CALIBRATION
SECTION DESIGNATED BY
SERVER?

NO

YES

STORE POSITION DATA —S130

INPUT POSITION DATA —S140

S150

TERMINAL
PASSED CALIBRATION
SECTION?

NO

YES

PERFORM SENSOR
CALIBRATION —S160

S170

PERFORM POSITION
GUIDE OPERATION

END

FIG.6

SENSOR CALIBRATION

DETECT ROTATION POINT
FROM PRE-STORED POINT DATA — S161

READ CALIBRATION POSITION
DESIGNATED BY SERVER — S163

PRODUCE DIFFERENCE VALUE
BETWEEN ROTATION POINT
AND CALIBRATION POSITION — S165

PERFORM SENSOR CALIBRATION
USING PRODUCED
DIFFERENCE VALUE — S167

END

FIG.7